# EUROPÄISCHE PATENTSCHRIFT

(11) **EP 2 712 787 B1**
(45) Veröffentlichungstag und Bekanntmachung des Hinweises auf die Patenterteilung: **11.09.2019**
(21) Anmeldenummer: 13175222.2
(22) Anmeldetag: 05.07.2013
(51) Int. Cl.: B62D 5/12, B62D 5/06

(54) **Landwirtschaftliches Fahrzeug mit Servolenkung**
Agricultural vehicle with power steering
Véhicule agricole doté d'une direction assistée

(30) Priorität: 27.09.2012 DE 102012018993
(43) Veröffentlichungstag der Anmeldung: 02.04.2014
(73) Patentinhaber: CLAAS Selbstfahrende Erntemaschinen GmbH, 33428 Harsewinkel (DE)
(72) Erfinder: Gausmann, Ludger, 49170 Hagen a.T. (DE)
(74) Vertreter: CLAAS Gruppe

(56) Entgegenhaltungen:
- EP-A1- 1 426 203
- DE-A1- 19 755 278

## Beschreibung

Die vorliegende Erfindung betrifft ein landwirtschaftliches Fahrzeug mit einer Servolenkung, insbesondere einer hydrostatischen Servolenkung.

Bei landwirtschaftlichen Fahrzeugen wie etwa Traktoren, Erntemaschinen etc. kann die Last auf verschiedenen Achsen stark variieren, je nach dem, welche Werkzeuge vorn oder hinten an das Fahrzeug angekoppelt sind, oder ob Fracht oder Ballast mitgeführt wird. Eine Servolenkung für ein solches Fahrzeug ist im Allgemeinen ausgelegt, um in einer Situation, in der die gelenkte Achse "normal" belastet ist, dem Fahrer eine befriedigende Lenkunterstützung zu bieten. Mit zunehmender Belastung der gelenkten Achse nimmt jedoch auch die Lenkkraft zu, die auf die Räder der Achse zum Ändern des Spurwinkels ausgeübt werden muss. Dies kann dazu führen, dass bei hoher Belastung der gelenkten Achse die von der Servolenkung ausgeübte Lenkkraft den Anforderungen nicht mehr genügt, und die Manövrierbarkeit des Fahrzeugs eingeschränkt ist.

Die maximale Lenkkraft, die eine hydrostatische Servolenkung erzeugen kann, ist bestimmt durch den maximalen Druck des in der Servolenkung zirkulierenden Hydraulikfluids und die Kolbenquerschnittsfläche eines an den Rädern angreifenden Lenkzylinders. Wenn die Lenkkraft erhöht werden muss, ist es prinzipiell möglich, einen Lenkzylinder mit größerem Kolbenquerschnitt zu verwenden. Je größer jedoch der Durchmesser des Lenkzylinders ist, umso schwieriger ist er am Fahrzeug unterzubringen, umso höher sind sein Gewicht und seine Fertigungskosten.

Aus DE 197 55 278 A1 ist eine gattungsgemäße Lenkachse, unter anderem für landwirtschaftliche Nutzfahrzeuge, bekannt, an der zwei Lenkzylinder wirksam sind. Indem diese zwei Lenkzylinder unterschiedlichen Lenkkreisen angehören, wird eine Redundanz geschaffen, die die Ausfallsicherung der Lenkung verbessert und dadurch eine Straßenverkehrszulassung eines solchen Fahrzeugs auch für hohe Geschwindigkeiten ermöglicht. Ob die zwei Lenkkreise gleichzeitig bei jedem Lenkmanöver aktiv sind, oder ob der zweite nur im Falle einer Störung des ersten wirksam wird, geht aus DE 197 55 278 A1 nicht hervor. Die Notwendigkeit, dass beide Lenkkreise gemeinsam wirksam werden, besteht nicht, da die erforderliche Lenckraft im Allgemeinen mit der Fahrzeuggeschwindigkeit abnimmt, also gerade im hohen Geschwindigkeitsbereich, in dem die Existenz des zweiten Lenckreises für die Straßenverkehrstauglichkeit des Fahrzeugs ausschlaggebend ist, die erforderlichen Lenkkräfte eher gering sind.

Herkömmlicherweise muss der potentielle Käufer eines landwirtschaftlichen Fahrzeugs sorgfältig abwägen, ob er viel Geld für eine hoch leistungsfähige Servolenkung investiert, um größtmögliche Gewissheit zu haben, dass diese allen erdenklichen Belastungssituationen gewachsen ist, oder ob er ein Fahrzeug anschafft, dass preiswerter und leichter ist und dadurch einen bodenschonenden Betrieb mit geringen Kraftstoffkosten ermöglicht, und dabei die Möglichkeit in Kauf nimmt, dass Anwendungssituationen auftreten können, denen die Servolenkung dieses Fahrzeugs nicht gewachsen ist.

Aufgabe der Erfindung ist, ein landwirtschaftliches Fahrzeug zu schaffen, dass dem Kaufinteressenten dieses Dilemma erspart.

Die Aufgabe wird gelöst, indem bei einem landwirtschaftlichen Fahrzeug mit einer gelenkten Achse und einem an den Rädern der Achse angreifenden Hauptlenkzylinder die Räder wahlweise mit unterschiedlich breiten Reifenanordnungen ausrüstbar sind und ein Einbauraum für wenigstens einen an einem Rad der Achse angreifenden Hilfslenkzylinder freigehalten ist. Wenn ein solches Fahrzeug für Anwendungen eingesetzt werden soll, die eine starke Belastung der gelenkten Achse mit sich bringen und dementsprechend hohe Lenkkräfte erforderlich machen, dann kann zum einen die hohe Achslast über eine breite Reifenanordnung auf eine große Bodenfläche verteilt werden, zum anderen kann durch Nachrüsten des Hilfslenkzylinders eine auch für solche Anwendungen ausreichende Lenkunterstützung bereitgestellt werden.

Ein Einlassanschluss, über den der Lenkzylinder Druckfluid aufnimmt, kann zweckmäßigerweise mit einer Druckfluidquelle über ein Ventil verbunden sein, das durch den an einem Einlassanschluss des Hauptlenkzylinders herrschenden Druck gesteuert ist. So kann, wenn ein hoher Druck am Einlassanschluss des Hauptlenkzylinders auf einen hohen Lenkwiderstand hinweist, durch Öffnen des Ventils automatisch der Hilfslenkzylinder zugeschaltet werden.

Das Ventil kann insbesondere ein Wegeventil sein, über das der Einlassanschluss des Hilfslenkzylinders wahlweise mit der Druckfluidquelle oder mit einem drucklosen Reservoir kommuniziert, um sowohl den Zufluss von Druckfluid aus der Quelle als auch den Abfluss zum Reservoir zu ermöglichen.

Zum Steuern der Druckfluidversorgung des Hauptlenkzylinders ist vorzugsweise ein Lenkaggregat vorgesehen, das mit einer Druckfluidquelle und einem drucklosen Reservoir kommunizierende Primäranschlüsse und mit den Hauptlenkzylinder kommunizierende Sekundäranschlüsse aufweist und einen Druckfluidstrom, der am mit der Druckfluidquelle verbundenen Primäranschluss eintritt, entsprechend der Stellung einer angeschlossenen Lenkhandhabe auf einen der Sekundäranschlusse und den anderen Primäranschluss aufteilt. Ein solches Lenkaggregat ist z.B. unter der Bezeichnung Orbitrol bekannt.

Eine Verzweigung, über die ein Anschluss des Ventils versorgbar ist, kann an einer Leitung vorgesehen sein, die einen der Sekundäranschlüsse des Lenkaggregats mit dem Hauptlenkzylinder verbindet.

Der über die Verzweigung versorgte Anschluss des Ventils kann insbesondere der bereits erwähnte Einlassanschluss sein.

Dies hat zur Folge, dass der Strom des vom Lenkaggregat durchgelassenen Druckfluids sich auf Haupt- und Hilfslenkzylinder verteilt. Wenn das Lenkaggregat in an sich bekannter Weise durch eine Lenkhandhabe, insbesondere ein Lenkrad, gesteuert ist, hat eine solche Anordnung zur Folge, dass die Übersetzung zwischen einer Bewegung der Lenkhandhabe und einer daraus resultierenden Änderung des Einschlagwinkels der Räder bei offenem Ventil kleiner ist als bei geschlossenem Ventil. So ergibt sich automatisch eine besonders feinfühlige Lenkung, wenn die auf der Achse ruhende Last hoch ist.

Denkbar ist aber auch, dass der über die Verzweigung versorgte Anschluss des Ventils ein Steueranschluss ist, durch dessen anliegenden Druck das Ventil gesteuert ist, ohne dass dafür zwangsläufig Druckfluid durch den Steueranschluss fließen muss.

Als Druckfluidquelle zur Versorgung des Hauptlenkzylinders kann dann eine erste Pumpe vorgesehen sein, wohingegen ein Einlassanschluss des Ventils mit einer zweiten Pumpe kommuniziert, um den Hilfslenkzylinder mit Druckfluid zu versorgen. Auf diese Weise kann eine Veränderung des Übersetzungsverhältnisses der Lenkung beim Aktivwerden des Hilfslenkzylinders vermieden werden.

Einer besonders bevorzugten Ausgestaltung der Erfindung zufolge kann ein in der Praxis von der Aktivierung des Hilfslenkzylinders unabhängiges Übersetzungsverhältnis auch dadurch erreicht werden, dass eine Verzweigung, über die ein Einlassanschluss des Ventils versorgt ist, an einer Leitung vorgesehen ist, die die Druckquelle mit einem der Primäranschlüsse des Lenkaggregats verbindet. Auf diese Weise kann eine zweite Pumpe eingespart werden, und derjenige Anteil der Förderleistung der Druckquelle, die vom Lenkaggregat nicht zum Antreiben des Hauptlenkzylinders in Anspruch genommen wird, kann zum Ansteuern des Hilfslenkzylinders nutzbar gemacht werden.

Reifenanordnungen für die gelenkte Achse, die vom Hersteller des landwirtschaftlichen Fahrzeugs als Zubehör zur Verfügung gestellt werden können, umfassen vorzugsweise wenigstens eine erste Anordnung mit je einem Reifen einer ersten Breite pro Rad und eine zweite Anordnung mit je einem Reifen einer zweiten Breite pro Rad oder wenigstens eine erste Anordnung mit einem einzelnen Reifen pro Rad und eine zweite Anordnung mit zwei Reifen pro Rad.

Zweckmäßigerweise kann das erfindungsgemäße Fahrzeug eine Ballasthalterung aufweisen. Vorzugsweise ist die Halterung am Fahrzeug so angeordnet, dass an ihr gehaltener Ballast die gelenkte Achse belastet. So kann insbesondere ein Gegengewicht zu einem die gelenkte Achse entlastenden, an dem Fahrzeug montierten schweren Werkzeug geschaffen werden und sichergestellt werden, dass auch bei Gebrauch eines solches Werkzeugs die für ein sicheres Manövrieren erforderlichen Lenkkräfte auf den Boden übertragen werden können.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein schematisches Blockdiagramm einer gelenkten Achse und einer damit verbundenen Servolenkung eines landwirtschaftlichen Fahrzeugs gemäß der vorliegenden Erfindung;
- Fig. 2: ein Blockdiagramm der Servolenkung aus Fig. 1, ergänzt durch zwei Hilfslenkzylinder;
- Fig. 3: ein Blockdiagramm der ergänzten Servolenkung gemäß einer zweiten Ausgestaltung;
- Fig. 4: ein Blockdiagramm der ergänzten Servolenkung gemäß einer dritten Ausgestaltung; und
- Fig. 5: eine Seitenansicht eines landwirtschaftlichen Fahrzeugs, an dem die Erfindung anwendbar ist.

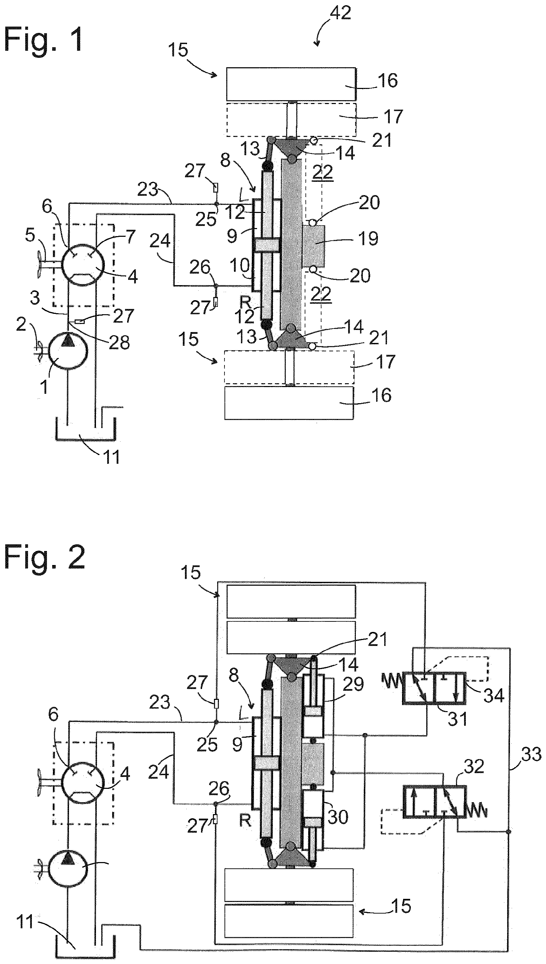

Fig. 1 zeigt ein Blockdiagramm einer hydrostatischen Lenkung und einer von ihr gelenkten Achse 42 eines landwirtschaftlichen Fahrzeugs in einer Grundausbaustufe der Erfindung. Die Achse 42 umfasst eine Achstraverse 18 und an deren Enden angelenkte Räder 15. Die hydrostatische Lenkung umfasst eine Pumpe 1, die über eine Welle 2 mit einem nicht dargestellten Verbrennungsmotor verbunden ist, der auch die Antriebsenergie für die Fortbewegung des Fahrzeugs sowie ggf. für den Betrieb von mitgeführten Werkzeugen liefert. Eine Hochdruckleitung 3 erstreckt sich von einem Auslass der Pumpe 1 zu einem Primäreinlass eines Lenkaggregats 4. Das Lenkaggregat 4 ist über eine Lenkwelle 5 mit einem nicht dargestellten Lenkrad verbunden und teilt den von der Pumpe 1 zugeführten Volumenstrom des Hydraulikfluids in Abhängigkeit von der Lenkradstellung auf in einen Lenkanteil, der über einen von zwei Sekundäranschlüssen 6, 7 des Lenkaggregats 4 einer von zwei Kammern 9, 10 eines Hauptlenkzylinders 8 zugeführt wird, und einen Rücklaufanteil, der, zusammen mit an jeweils anderen Sekundäranschluss 7 bzw. 6 von der anderen Kammer 10 bzw. 9 zurückströmendem Hydraulikfluid, über einen Primärauslass des Lenkaggregats 4 zu einem Tank 11 strömt, vom wo aus es von der Pumpe 1 wieder angesaugt wird.

Der Hauptlenkzylinder 8 ist ein doppelt wirkender Zylinder mit zwei Kolbenstangen 12, die über Lenkschubstangen 13 an Lenkhebeln 14 der Räder 15 angreifen.

Wie jeweils durch einen durchgezogenen und einen gestrichelten Umriss angedeutet, ist der Einbauraum der Räder 15 an der Karosserie des landwirtschaftlichen Fahrzeugs groß genug, um zusätzlich zu einem vorhandenen Reifen 16 noch einen weiteren Reifen 17 aufzunehmen.

Der Hauptlenkzylinder 8 ist an der Achstraverse 18 angebracht, an deren Enden die beiden Lenkhebel 14 angreifen. An einer dem Hauptlenkzylinder 8 gegenüberliegenden Seite der Achstraverse 8 befindet sich ein Vorsprung 19 mit seitlichen Befestigungsösen 20. Entsprechende Befestigungsösen 21 der Lenkhebel 14 liegen den Befestigungsösen 20, jeweils getrennt durch einen Leerraum 22, gegenüber.

An Druckfluidleitungen 23, 24, die die Sekundäranschlüsse 6, 7 des Lenkaggregats 4 mit den Kammern 9 bzw. 10 des Hauptlenkzylinders 8 verbinden, sind Verzweigungen 25 bzw. 26 mit jeweils einem durch einen Blindstopfen verschlossenen Anschluss 27 gebildet. Eine entsprechende Verzweigung 28 kann an der Hochdruckleitung 3 vorgesehen sein.

In einer Einsatzsituation, in der die in Fig. 1 gezeigte gelenkte Achse eine hohe Last zu tragen hat, kann es zum Verteilen der Last auf den befahrenen Untergrund erforderlich sein, an den Rädern 15, wie in Fig. 2 dargestellt, Zwillingsreifen 16, 17 zu montieren, oder die in Fig. 1 gezeigten, den verfügbaren Einbauraum nicht ausfüllenden schmalen Reifen 16 durch breitere Reifen zu ersetzen. Je breiter die Aufstandsfläche eines Rades 15 ist, umso größer ist das zum Lenken des Rades 15 erforderliche Drehmoment. Es kann daher, wenn Zwillingsreifen oder breite Reifen montiert sind, insbesondere bei langsamer Fahrt, der Fall auftreten, dass die Kraft des Hauptlenkzylinders 8 allein nicht ausreicht, um dieses Drehmoment auszuüben. Um auch in einer solchen Situation ein sicheres Lenken zu ermöglichen, bietet der in Fig. 1 gezeigte Aufbau die Möglichkeit, in wenigstens einem der Leerräume 22, vorzugsweise in beiden, einen an die Befestigungsösen 20, 21 angelenkten Hilfslenkzylinder 29, 30 nachzurüsten.

Fig. 2 zeigt eine solche nachgerüstete Lenkung. Die Blindstopfen an den Anschlüssen 27 der Verzweigungen 25, 26 sind beseitigt, stattdessen ist der Hilfslenkzylinder 29 mit der Druckfluidleitung 23 über die Verzweigung 25 und ein Wegeventil 31 verbunden und der Hilfslenkzylinder 30 mit der Druckfluidleitung 24 über die Verzweigung 26 und ein Wegeventil 32. Die Wegeventile 31, 32 sind baugleich und analog zu einander angeordnet, so dass es für ein Verständnis der Wirkungsweise der nachgerüsteten Servolenkung genügt, die Funktion eines der Wegeventile, hier die des Wegeventils 31, im Detail zu beschreiben.

Das Wegeventil 31 hat eine Ruhestellung, in der es, wie in Fig. 2 dargestellt, den Hilfslenkzylinder 29 über eine Leitung 33 mit den Tank 11 verbindet. Solange sich das Wegeventil 31 in dieser Ruhestellung befindet, folgt der Hilfslenkzylinder 29 jeder Bewegung des Lenkhebels 14, an den er über die Öse 21 angelenkt ist, ohne selber eine maßgebliche Kraft auf den Lenkhebel 14 auszuüben.

Ein Steueranschluss 34 des Wegeventils 31 ist mit der Verzweigung 25 verbunden. Wenn das Lenkaggregat 4 die Druckfluidleitung 23 mit Druck beaufschlagt, um die Kammer 9 des Hauptlenkzylinders 8 zu füllen und so ein Lenkmoment im Gegenuhrzeigersinn auf die Räder 15 auszuüben, dann steigt auch der Druck am Steueranschluss 34. Wenn der Lenkwiderstand der Räder 15 hoch ist und der Druck auf der Leitung 23 deshalb eine vorgegebene Schwelle übersteigt, geht das Wegeventil 31 in eine aktive Stellung über, in welcher der Hilfslenkzylinder 29 vom Tank 11 getrennt ist und stattdessen mit der Leitung 23 kommuniziert.

Da gleichzeitig der Druck auf der Leitung 24 niedrig ist, bleibt das Wegeventil 32 in Ruhestellung, so dass der andere Hilfslenkzylinder 30 weiterhin mit dem Tank 11 kommuniziert.

Das Umschalten des Wegeventils 31 in die aktive Stellung hat zur Folge, dass das Druckfluid, das von Lenkaggregat 4 am Sekundäranschluss 6 ausgegeben wird, sich auf Haupt- und Hilfslenkzylinder 8, 29 verteilt, mit der Folge, dass in der aktiven Stellung des Wegeventils 31 eine stärkere Drehung des Lenkrads erforderlich ist, um einen gegebenen Einschlagwinkel der Räder 15 zu erreichen, als in der Ruhestellung des Wegeventils 31. Da sich aber der Druck des Hydraulikfluids auf eine größere Kolbenquerschnittsfläche verteilt als bei alleiniger Nutzung des Hauptlenkzylinders 8, kann trotz begrenzten Ausgangsdrucks der Pumpe 1 ein starkes Lenkmoment auf die Räder 15 ausgeübt werden. Die Belastung der der mechanischen Komponenten 12, 13, 14 ändert sich durch die Hinzufügung des Hilfslenkzylinders nicht wesentlich; um die Lenkung der Fig. 1 in die in Fig. 2 gezeigte umzubauen, müssen daher nur Komponenten hinzugefügt werden, ein Austausch von Komponenten zur Anpassung an das erhöhte Lenkmoment ist nicht nötig. Daher ist die Nachrüstung mit geringem Aufwand an Arbeitszeit und Komponenten durchführbar.

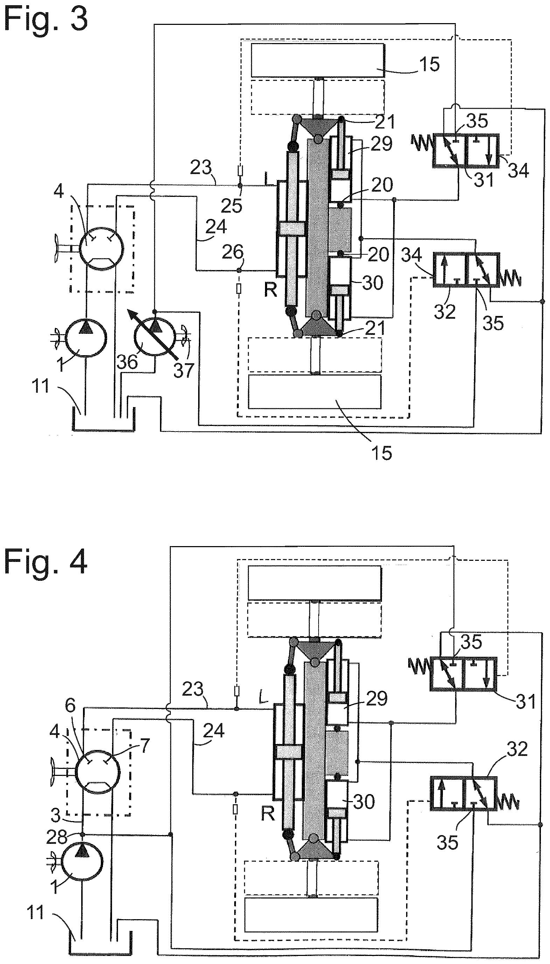

Fig. 3 zeigt das Lenksystem mit nachgerüsteten Hilfslenkzylindern 29, 30 gemäß einer zweiten Ausgestaltung der Erfindung. Auch hier sind den zwischen den Ösen 20, 21 montierten Hilfslenkzylindern 29, 30 Wegeventile 31, 32 vorgeschaltet, um den Zu- bzw. Abfluss von Druckfluid in die bzw. aus den Hilfslenkzylindern 29, 30 zu steuern. Ein Steueranschluss 34 der Wegeventile 31, 32 ist wiederum mit den Druckfluidleitungen 23, 24 verbunden, um die Wegeventile 31 je nach Druck in der zugeordneten Leitung 23 bzw. 24 zwischen Ruhestellung und aktiver Stellung umzuschalten. Anders als im Falle der Fig. 2 ist jedoch ein Einlassanschluss 35 der Wegeventile 31, 32 nicht mit der Leitung 23, 24 verbunden, sondern mit einer zweiten Pumpe 36, die parallel zur Pumpe 1 vom Verbrennungsmotor angetrieben ist. Da der vom Lenkaggregat 4 geregelte Druckfluidstrom auf den Leitungen 23, 24 hier nur den Hauptlenkzylinder 8 antreibt, unabhängig von der Stellung der Wegeventile 31, 32, ist das Übersetzungsverhältnis der Lenkung bei dieser Ausgestaltung unabhängig davon, ob die Hilfslenkzylinder 29, 30 aktiv sind oder nicht.

Um zu verhindern, dass die Pumpe 36 den Verbrennungsmotor belastet, während die Hilfslenkzylinder 29, 30 nicht aktiv sind, kann in einer Welle 37, die die Pumpe 36 mit dem Verbrennungsmotor verbindet, eine in der Figur nicht dargestellte Kupplung vorgesehen sein, die an die Wegeventil 31, 32 gekoppelt ist und nur dann schließt, wenn wenigstens eines der Wegeventile 31, 32 in aktiver Stellung ist. Denkbar ist auch, eine solche Kupplung abhängig vom Druck auf den Leitungen 23 bei einer geringfügig niedrigeren Schwelle als die Wegeventile 31, 32 zu schalten, so dass, wenn eines der Wegeventile 31, 32 in die aktive Stellung übergeht, die Pumpe 36 bereits in Betrieb ist und hoher Druck an den Einlassanschlüssen 35 der Wegeventile 31, 32 anliegt.

Die Kupplung zwischen Verbrennungsmotor und Welle 37 ist nicht erforderlich, wenn die Pumpe 36 eine verstellbare Pumpe ist, deren Schluckmenge durch den Druck an ihrem Ausgang geregelt ist. Indem das Schluckvolumen mit steigendem Druck am Ausgang abnimmt und bei Erreichen eines Grenzdrucks Null wird, kann ein Blockieren der Pumpe 36 vermieden werden. Wenn die Pumpe 36 läuft, während die Wegeventile 31, 32 in inaktiver Stellung sind, steigt der Druck am Ausgang der Pumpe 36 so lange, bis der Grenzdruck erreicht ist; ab dann ist die Schluckmenge Null, und die Pumpe 36 leistet so lange keine hydraulische Arbeit, bis durch einen Übergang eines der Wegeventile 31, 32 in die aktive Stellung der Druck wieder fällt.

Der in Fig. 4 gezeigten Ausgestaltung zufolge sind die Einlassanschlüsse 35 der Wegeventile 31, 32 über die Verzweigung 28 mit der Hochdruckleitung 3 verbunden. So wird die Tatsache ausgenutzt, dass das Lenkaggregat 4 meist nur einen kleinen Teil des von der Pumpe 1 umgewälzten Druckfluidstroms in eine der Leitungen 23, 24 einspeist und der überwiegende Teil des Druckfluidstroms über den Primärauslass direkt in den Tank 11 zurückgespeist wird. Wenn der Druck auf der Leitung 23 oder 24 so hoch ist, dass dadurch das Wegeventil 30 oder 31 in die aktive Stellung übergeht und daraufhin Druckfluid über die Verzweigung 28 bezieht, verringert sich zwar der Volumenstrom, der dem Lenkaggregat 4 zur Verfügung steht, doch hat dies nur dann einen Einfluss auf die Lenkübersetzung, wenn der für das Lenkaggregat 4 verbleibende Volumenstrom kleiner ist als der, den das Lenkaggregat 4 an einem seiner Sekundäranschlüsse 6 und 7 nach Maßgabe des Lenkradeinschlags eigentlich ausgeben müsste. Da hohe, die Hinzunahme der Hilfslenkzylinder 29, 30 erforderlich machende Lenkkräfte im Wesentlichen nur bei niedriger Fahrgeschwindigkeit auftreten, bei denen schnelle Lenkradbewegungen im Allgemeinen nicht erforderlich sind, ist die Wahrscheinlichkeit, dass gleichzeitiger Druckfluidbedarf von Haupt- und Hilfslenkzylindern zu einer Abweichung der Lenkübersetzung führt, gering, so dass die Kosten einer zusätzlichen Pumpe bei der Ausgestaltung der Fig. 4 vermieden werden können, ohne dafür nennenswerte Einbußen bei der Manövrierbarkeit des Fahrzeug in Kauf nehmen zu müssen.

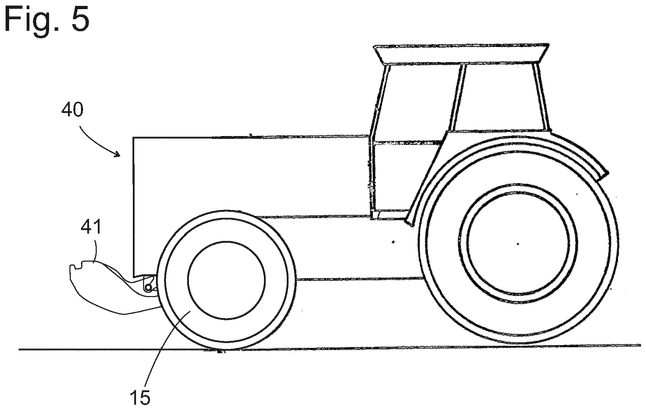

Fig. 5 zeigt als Beispiel eines mit der erfindungsgemäßen hydrostatischen Lenkung ausgestatteten Fahrzeugs einen Traktor 40. Die Räder 15, auf die die hydrostatische Lenkung einwirkt, sind hier die der Vorderachse. Wenn am Heck des Traktors 40 ein schweres Bodenbearbeitungswerkzeug montiert ist, reduziert dies die Last auf der Vorderachse. Um die mit der erfindungsgemäßen Lenkung erzeugbaren hohen Lenkkräfte dennoch auf den Boden übertragen zu können, kann es zweckmäßig sein, die Last auf der Vorderachse durch Anhängen von Ballastkörpern 41 am Bug zu erhöhen.

### Bezugszeichen

- 1: Pumpe
- 2: Welle
- 3: Hochdruckleitung
- 4: Lenkaggregat
- 5: Lenkwelle
- 6: Sekundäranschluss
- 7: Sekundäranschluss
- 8: Hauptlenkzylinder
- 9: Kammer
- 10: Kammer
- 11: Tank
- 12: Kolbenstange
- 13: Lenkschubstange
- 14: Lenkhebel
- 15: Rad
- 16: Reifen
- 17: Reifen
- 18: Achstraverse
- 19: Vorsprung
- 20: Befestigungsöse
- 21: Befestigungsöse
- 22: Leerraum
- 23: Druckfluidleitung
- 24: Druckfluidleitung
- 25: Verzweigung
- 26: Verzweigung
- 27: Anschluss
- 28: Verzweigung
- 29: Hilfslenkzylinder
- 30: Hilfslenkzylinder
- 31: Wegeventil
- 32: Wegeventil
- 33: Leitung
- 34: Steueranschluss
- 35: Einlassanschluss
- 36: Pumpe
- 37: Welle
- 38: Absperrventil
- 39: Rückschlagventil
- 40: Traktor
- 41: Ballastkörper
- 42: Achse

## Patentansprüche

1. Landwirtschaftliches Fahrzeug mit einer eine Achstraverse umfassenden gelenkten Achse (42) und einem an den Rädern (15) der Achse (42) angreifenden Hauptlenkzylinder (8), **dadurch gekennzeichnet, dass** die Räder (15) wahlweise mit unterschiedlich breiten Reifenanordnungen ausrüstbar sind und ein Einbauraum (22) für wenigstens einen an einem Rad (15) der Achse (42) angreifenden Hilfslenkzylinder vorgesehen ist, wobei der Hauptlenkzylinder (8) an der Achstraverse angebracht ist und der Einbauraum (22) einer dem Hauptlenkzylinder (8) gegenüberliegenden Seite der Achstraverse zugeordnet ist.

2. Landwirtschaftliches Fahrzeug nach Anspruch 1, **dadurch gekennzeichnet, dass** ein Einlassanschluss (35) des Hilfslenkzylinders (29, 30) mit einer Druckfluidquelle (1; 36) über ein Ventil (31; 32) verbunden ist, das durch den an einem Einlassanschluss des Hauptlenkzylinders (8) herrschenden Druck gesteuert ist.

3. Landwirtschaftliches Fahrzeug nach Anspruch 2, **dadurch gekennzeichnet, dass** das Ventil (31; 32) ein Wegeventil ist, über das der Einlassanschluss (35) des Hilfslenkzylinders (29; 30) wahlweise mit der Druckfluidquelle (1; 36) oder mit einem drucklosen Reservoir (11) kommuniziert.

4. Landwirtschaftliches Fahrzeug nach einem der vorhergehenden Ansprüche, **gekennzeichnet durch** ein Lenkaggregat (4), das mit einer Druckfluidquelle (1) und einem drucklosen Reservoir (11) kommunizierende Primäranschlüsse und mit dem Hauptlenkzylinder (8) kommunizierende Sekundäranschlüsse (6, 7) aufweist.

5. Landwirtschaftliches Fahrzeug nach einem der vorhergehenden Ansprüche, **dadurch gekennzeichnet, dass** eine Verzweigung (25; 26) an einer Leitung (23; 24) vorgesehen ist, die einen der Sekundäranschlüsse (6, 7) des Lenkaggregats (4) mit dem Hauptlenkzylinder (8) verbindet.

6. Landwirtschaftliches Fahrzeug nach Anspruch 4 und Anspruch 2 oder 3, **dadurch gekennzeichnet, dass** eine Verzweigung (25; 26), über die ein Anschluss (34; 35) des Ventils (31; 32) versorgt ist, an einer Leitung (23; 24) vorgesehen ist, die einen der Sekundäranschlüsse (6, 7) des Lenkaggregats (4) mit dem Hauptlenkzylinder (8) verbindet.

7. Landwirtschaftliches Fahrzeug nach Anspruch 6, **dadurch gekennzeichnet, dass** der über die Verzweigung (25; 26) versorgte Anschluss des Ventils (31; 32) ein Einlassanschluss (35) ist.

8. Landwirtschaftliches Fahrzeug nach einem der Ansprüche 4 bis 7, **dadurch gekennzeichnet, dass** das Lenkaggregat (4) durch eine Lenkhandhabe gesteuert ist und dass die Übersetzung zwischen einer Bewegung der Lenkhandhabe und einer daraus resultierenden Änderung des Einschlagwinkels der Räder (15) bei offenem Ventil (31; 32) kleiner ist als bei geschlossenem Ventil.

9. Landwirtschaftliches Fahrzeug nach Anspruch 6, **dadurch gekennzeichnet, dass** der über die Verzweigung (25; 26) versorgte Anschluss des Ventils (31; 32) ein Steueranschluss (34) ist.

10. Landwirtschaftliches Fahrzeug nach Anspruch 4, 8 oder 9 und Anspruch 2 oder 3, **dadurch gekennzeichnet, dass** der Hauptlenkzylinder (8) durch eine erste Pumpe (1) versorgt ist und dass die Druckfluidquelle, mit der der Hilfslenkzylinder (29; 30) verbunden ist, eine zweite Pumpe (36) ist.

11. Landwirtschaftliches Fahrzeug nach einem der vorhergehenden Ansprüche, **dadurch gekennzeichnet, dass** eine Verzweigung (28) an einer Leitung (3) vorgesehen ist, die die Druckfluidquelle (1) mit einem der Primäranschlüsse des Lenkaggregats (4) verbindet.

12. Landwirtschaftliches Fahrzeug nach Anspruch 4, 8 oder 9 und Anspruch 2 oder 3, **dadurch gekennzeichnet, dass** eine Verzweigung (28), über die ein Einlassanschluss (35) des Ventils (31; 32) versorgbar ist, an einer Leitung (3) vorgesehen ist, die die Druckquelle (1) mit einem der Primäranschlüsse des Lenkaggregats (4) verbindet.

13. Landwirtschaftliches Fahrzeug nach einem der vorhergehenden Ansprüche, **dadurch gekennzeichnet, dass** die Reifenanordnungen wenigstens eine erste Anordnung mit je einem Reifen einer ersten Breite pro Rad und eine zweite Anordnung mit je einem Reifen einer zweiten Breite pro Rad oder wenigstens eine erste Anordnung mit einem einzelnen Reifen (16) pro Rad (15) und eine zweite Anordnung mit zwei Reifen (16, 17) pro Rad (15) umfassen.

14. Landwirtschaftliches Fahrzeug nach einem der vorhergehenden Ansprüche, **dadurch gekennzeichnet, dass** es eine Ballasthalterung aufweist, wobei an der Halterung gehaltener Ballast (41) die gelenkte Achse (42) belastet.

## Claims

1. An agricultural vehicle with a steered axle (42) comprising an axle traverse and a main steering cylinder (8) engaging with the wheels (15) of the axle (42), **characterized in that** the wheels (15) can selectively be fitted with tyre set-ups with different widths and a mounting space (22) is provided for at least one auxiliary steering cylinder engaging with a wheel (15) of the axle (42), wherein the main steering cylinder (8) is mounted on the axle traverse and the mounting space (22) is associated with the side of the axle traverse which is opposite to the main steering cylinder (8).

2. The agricultural vehicle as claimed in claim 1, **characterized in that** an inlet port (35) of the auxiliary steering cylinder (29, 30) is connected to a hydraulic fluid source (1; 36) via a valve (31; 32) which is controlled by means of the pressure exerted at an inlet port of the main steering cylinder (8).

3. The agricultural vehicle as claimed in claim 2, **characterized in that** the valve (31; 32) is a distributing valve via which the inlet port (35) of the auxiliary steering cylinder (29; 30) selectively communicates with the hydraulic fluid source (1; 36) or with an unpressurized reservoir (11).

4. The agricultural vehicle as claimed in one of the preceding claims, **characterized by** a steering assembly (4) which comprises primary ports communicating with a hydraulic fluid source (1) and an unpressurized reservoir (11) and secondary ports (6, 7) communicating with the main steering cylinder (8).

5. The agricultural vehicle as claimed in one of the preceding claims, **characterized in that** a branch (25; 26) is provided on a line (23; 24) which connects one of the secondary ports (6, 7) of the steering assembly (4) with the main steering cylinder (8).

6. The agricultural vehicle as claimed in claim 4 and claim 2 or claim 3, **characterized in that** a branch (25; 26) via which a port (34; 35) of the valve (31; 32) is supplied is provided on a line (23; 24) which connects one of the secondary ports (6, 7) of the steering assembly (4) with the main steering cylinder (8).

7. The agricultural vehicle as claimed in claim 6, **characterized in that** the port of the valve (31; 32) supplied via the branch (25; 26) is an inlet port (35).

8. The agricultural vehicle as claimed in one of claims 4 to 7, **characterized in that** the steering assembly (4) is controlled via a steering handle and **in that** the transmission between a movement of the steering handle and a change in the turning angle of the wheels (15) resulting therefrom when the valve (31; 32) is open is smaller than when the valve is closed.

9. The agricultural vehicle as claimed in claim 6, **characterized in that** the port of the valve (31; 32) supplied via the branch (25; 26) is a control port (34).

10. The agricultural vehicle as claimed in claim 4, claim 8 or claim 9 and claim 2 or claim 3, **characterized in that** the main steering cylinder (8) is supplied by means of a first pump (1) and **in that** the hydraulic fluid source with which the auxiliary steering cylinder (29; 30) is connected is a second pump (36).

11. The agricultural vehicle as claimed in one of the preceding claims, **characterized in that** a branch (28) is provided on a line (3) which connects the hydraulic fluid source (1) with one of the primary ports of the steering assembly (4).

12. The agricultural vehicle as claimed in claim 4, claim 8 or claim 9 and claim 2 or claim 3, **characterized in that** a branch (28) via which an inlet port (35) of the valve (31; 32) can be supplied is provided on a line (3) which connects the hydraulic fluid source (1) with one of the primary ports of the steering assembly (4).

13. The agricultural vehicle as claimed in one of the preceding claims, **characterized in that** the tyre set-ups comprise at least one first set-up with respectively one tyre with a first width per wheel and a second set-up respectively with one tyre with a second width per wheel or at least one first set-up with a single tyre (16) per wheel (15) and a second set-up with two tyres (16, 17) per wheel (15).

14. The agricultural vehicle as claimed in one of the preceding claims, **characterized in that** it comprises a ballast mounting, wherein ballast (41) retained by the mounting loads the steered axle (42).

## Revendications

1. Véhicule agricole comprenant un essieu directeur (42) englobant une traverse d'essieu et comprenant un vérin de direction principal (8) agissant sur les roues (15) de l'essieu (42), **caractérisé en ce que** les roues (15) peuvent être équipées sélectivement d'agencements de pneumatiques de diverses largeurs, et un espace de montage (22) pour au moins un vérin de direction auxiliaire agissant sur une roue (15) de l'essieu (42) est prévu, le vérin de direction principal (8) étant monté sur la traverse d'essieu, et l'espace de montage (22) étant associé à un côté de la traverse d'essieu situé à l'opposé du vérin de direction principal (8).

2. Véhicule agricole selon la revendication 1, **caractérisé en ce qu'**un raccord d'entrée (35) du vérin de direction auxiliaire (29, 30) est relié à une source de fluide de pression (1 ; 36) par l'intermédiaire d'une valve (31 ; 32) qui est commandée par l'intermédiaire de la pression régnant au niveau d'un raccord d'entrée du vérin de direction principal (8).

3. Véhicule agricole selon la revendication 2, **caractérisé en ce que** la valve (31 ; 32) est une valve directionnelle par l'intermédiaire de laquelle le raccord d'entrée (35) du vérin de direction auxiliaire (29 ; 30) communique sélectivement avec la source de fluide de pression (1 ; 36) ou avec un réservoir sans pression (11).

4. Véhicule agricole selon une des revendications précédentes, **caractérisé par** un organe de direction (4) qui comporte des raccords primaires communiquant avec une source de fluide de pression (1) et avec un réservoir sans pression (11) et des raccords secondaires (6, 7) communiquant avec le vérin de direction principal (8).

5. Véhicule agricole selon une des revendications précédentes, **caractérisé en ce que** sur une conduite (23 ; 24) est prévue une bifurcation (25 ; 26) qui relie un des raccords secondaires (6, 7) de l'organe de direction (4) au vérin de direction principal (8).

6. Véhicule agricole selon la revendication 4 et la revendication 2 ou 3, **caractérisé en ce qu'**une bifurcation (25 ; 26), par l'intermédiaire de laquelle un raccord (34 ; 35) de la valve (31 ; 32) est alimenté, est prévue sur une conduite (23 ; 24) qui relie un des raccords secondaires (6, 7) de l'organe de direction (4) au vérin de direction principal (8).

7. Véhicule agricole selon la revendication 6, **caractérisé en ce que** le raccord de la valve (31 ; 32) alimenté par l'intermédiaire de la bifurcation (25, 26) est un raccord d'entrée (35) .

8. Véhicule agricole selon une des revendications 4 à 7, **caractérisé en ce que** l'organe de direction (4) est commandé par une manette de direction, et **en ce que** le rapport entre un déplacement de la manette de direction et une variation consécutive de l'angle de braquage des roues (15) est plus court à valve ouverte (31 ; 32) qu'à valve fermée.

9. Véhicule agricole selon la revendication 6, **caractérisé en ce que** le raccord de la valve (31 ; 32) alimenté par l'intermédiaire de la bifurcation (25 ; 26) est un raccord de commande (34) .

10. Véhicule agricole selon la revendication 4, 8 ou 9 et la revendication 2 ou 3, **caractérisé en ce que** le vérin de direction principal (8) est alimenté par l'intermédiaire d'une première pompe (1), et **en ce que** la source de fluide de pression, à laquelle le vérin de direction auxiliaire (29 ; 30) est relié, est une seconde pompe (36).

11. Véhicule agricole selon une des revendications précédentes, **caractérisé en ce que** sur une conduite (3) est prévue une bifurcation (28) qui relie la source de fluide de pression (1) à un des raccords primaires de l'organe de direction (4) .

12. Véhicule agricole selon la revendication 4, 8 ou 9 et la revendication 2 ou 3, **caractérisé en ce qu'**une bifurcation (28), par l'intermédiaire de laquelle un raccord d'entrée (35) de la valve (31 ; 32) peut être alimenté, est prévue sur une conduite (3) qui relie la source de pression (1) à un des raccords primaires de l'organe de direction (4).

13. Véhicule agricole selon une des revendications précédentes, **caractérisé en ce que** les agencements de pneumatiques comportent au moins un premier agencement avec un pneumatique d'une première largeur par roue et un second agencement avec un pneumatique d'une seconde largeur par roue ou au moins un premier agencement avec un seul pneumatique (16) par roue (15) et un second agencement avec deux pneumatiques (16, 17) par roue (15).

14. Véhicule agricole selon une des revendications précédentes, **caractérisé en ce qu'**il comporte un support de ballast, du ballast (41) supporté sur le support lestant l'essieu directeur (42).
